(19) Europäisches Patentamt
European Patent Office
Office européen des brevets

(11) EP 1 842 878 A1

(12) EUROPEAN PATENT APPLICATION
published in accordance with Art. 158(3) EPC

(43) Date of publication:
**10.10.2007 Bulletin 2007/41**

(21) Application number: **06712376.0**

(22) Date of filing: **26.01.2006**

(51) Int Cl.:
***C08L 67/00*** *(2006.01)* ***C08L 83/04*** *(2006.01)*
***D01F 6/92*** *(2006.01)*

(86) International application number:
**PCT/JP2006/301194**

(87) International publication number:
**WO 2006/080379 (03.08.2006 Gazette 2006/31)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.01.2005 JP 2005020938**
**15.07.2005 JP 2005206674**

(71) Applicant: **TORAY INDUSTRIES, INC.**
**Tokyo 103-8666 (JP)**

(72) Inventors:
- **SUZUKI, Toshiyuki**
**aizumi-cho, Sunto-gun, Shizuoka, 4110942 (JP)**
- **TAKEDA, Keiji**
**Kusatsu-shi, Shiga, 5250055 (JP)**
- **TANIDA, Noboru**
**Higashiomi-shi, Shiga 5270038 (JP)**

(74) Representative: **Webster, Jeremy Mark et al**
**Mewburn Ellis LLP**
**York House**
**23 Kingsway**
**London**
**WC2B 6HP (GB)**

# (54) RESIN COMPOSITION AND FIBER STRUCTURE

(57) To provide a resin composition and a fiber structure object, which do not cause dripping of a material upon combustion in applications used as flame retardant materials, for example, textile products, film products and resin molded products, and are also excellent in flame retardancy.
Disclosed is a polyester-based resin composition comprising a polyester-based resin and a silicone-based compound, the silicone-based compound being a silicone-based compound containing at least a structural unit represented by $RSiO_{1.5}$ (R is an organic group), wherein the content of a silanol group of the silicone-based compound is 2% or more and 10% or less in terms of a weight ratio based on the entire silicone-based compound and a mixing ratio of the silicone-based compound to the polyester-based resin is 100:0.1 or more and 100 : 10 or less in terms of a weight ratio.

EP 1 842 878 A1

## Description

TECHNICAL FIELD

The present invention relates to a flame retardant material and, more particularly, to a flame retardant material which does not cause dripping (melt-dripping) of a thermoplastic material upon combustion and also can exhibit flame retardancy.

BACKGROUND ART

As a technique of imparting flame retardancy to materials such as easily combustible resins and easily combustible fibers, there have hitherto been proposed various techniques of mixing materials with halogen-based flame retardants such as chlorine-containing-based flame retardants and bromine-containing-based flame retardants, or the halogen-based flame retardants and antimony-based flame retardants. However, these materials are excellent in flame retardancy but have a problem that a halogenated gas is generated from the halogen-based flame retardants upon combustion. To solve these problems, various studies have been made.
For example, various materials containing phosphorous-based flame retardants using a phosphorus compound containing neither a halogen element nor an antimony element have been proposed. However, these materials are inferior in flame retardancy to halogen-based and antimony-based flame retardants and are insufficient in flame retardancy.
To solve these problems, the use of a silicone-based compound, which does not contain a halogen element, an antimony element and a phosphorus element, is studied.
This silicone-based compound is composed of any one of a structural unit represented by a monofunctional $R_3SiO_{0.5}$ (M unit), a bifunctional $R_2SiO_{1.0}$ (D unit), a trifunctional $RSiO_{1.5}$ (T unit) and a tetrafunctional $SiO_{2.0}$ (Q unit).
As an example of imparting flame retardancy utilizing this silicone-based compound, a meltable polymer composition comprising a kneaded mixture of a non-silicone polymer and monoorganosiloxane (see patent document 1).
Certainly, this example does not contain a halogen element, an antimony element and a phosphorus element and can exhibit certain flame retardancy. However, a mixing ratio of the non-silicone polymer to the monoorganosiloxane must be adjusted within a range from 10:1 to 1:5 so as to exhibit flame retardancy and there is a problem that a large amount of the monoorganosiloxane causes an increase in cost and deterioration of physical properties of the non-silicone polymer. There is also a problem that dripping cannot be suppressed.
Also, a flame retardant thermoplastic molding composition comprising a high molecular weight linear polyester and a copolymer of a flame retardant amount of a polyetherimide and organosiloxane is proposed (see patent document 2).
Certainly, this example can exhibit certain flame retardancy, but there is a problem that flame retardancy and the dripping-suppressing effect are inferior because of poor heat resistance.
Also, a polyester-based resin composition for fiber, which contains 4% by weight or less of silicone oil having a functional group in a side chain and does not cause melt-dripping upon combustion (see patent document 3).
Certainly, this example exhibits certain flame retardancy and the dripping-suppressing effect, but there is a problem that flame retardancy is inferior because of poor heat resistance. Thus, a technique capable of suppressing dripping and exhibiting sufficient flame retardancy has never been established.

patent document 1: Japanese Unexamined Patent Publication (Kokai) No. 54-36365
patent document 2: Japanese Unexamined Patent Publication (Kokai) No. 7-166040
patent document 3: Japanese Unexamined Patent Publication (Kokai) No. 8-209446

DISCLOSURE OF THE INVENTION

Under these circumstances, an object of the present invention is to provide a thermoplastic material which suppresses dripping of a thermoplastic material upon combustion and also exhibits flame retardancy.
To achieve the above object, the present invention employs the following constitution.

(1) A polyester-based resin composition comprising a polyester-based resin and a silicone-based compound, the silicone-based compound being a silicone-based compound containing at least a structural unit represented by $RSiO_{1.5}$ (R is an organic group), wherein the content of a silanol group of the silanol-based compound is 2% or more and 10% or less in terms of a weight ratio based on the entire silicone-based compound and a mixing ratio of the silicone-based compound to the polyester-based resin is 100:0.1 or more and 100:10 or less in terms of a weight ratio.
(2) A resin molded article comprising the polyester-based resin composition according to (1).

(3) A resin composition comprising a base material resin, a silicone-based compound containing at least a structural unit represented by $RSiO_{1.5}$ (R is an organic group), and a compound having an imide structure.
(4) A fiber structure object comprising the polyester-based resin composition according to (3).
(5) A polyester-based fiber structure object comprising a polyester-based resin, a silicone-based compound and a flame retardant element, wherein the silicone-based compound contains at least a structural unit represented by $RSiO_{1.5}$ (R is an organic group), the content of the silicone-based compound is 0.5% or more and 30% or less in terms of a weight ratio based in the resin composition, and the content of the flame retardant element is 1,000 ppm or more and 50, 000 ppm or less in the resin composition.

Also, the present invention includes a resin molded article comprising any one of the resin compositions, and a textile product comprising any one of the fiber structure objects.

EFFECT OF THE INVENTION

According to the present invention, it is possible to provide, as a flame retardant resin material and a flame retardant fiber material, a flame retardant material which can be used for applications such as industries, clothings and non-clothings and does not cause melt-dripping of a material due to dripping, and also can exhibit flame retardancy.

BEST MODE FOR CARRYING OUT THE INVENTION

The present invention will now be described in detail.

The present invention provides a polyester-based resin composition comprising a polyester-based resin and a silicone-based compound, the silicone-based compound being a silicone-based compound containing at least a structural unit represented by $RSiO_{1.5}$ (R is an organic group), wherein the content of a silanol group of the silanol-based compound is 2% or more and 10% or less in terms of a weight ratio based on the entire silicone-based compound and a mixing ratio of the silicone-based compound to the polyester-based resin is 100:0.1 or more and 100:10 or less in terms of a weight ratio.

As describe above, the silicone-based compound is composed of a structural unit such as $R_3SiO_{0.5}$ (M unit), $R_2SiO_{1.0}$ (D unit), $RSiO_{1.5}$ (T unit) or $SiO_{2.0}$ (Q unit). As used herein, the silicone-based compound of the present invention is a silicone-based compound containing at least $RSiO_{1.5}$ (T unit) as a structural unit and may be composed of a single unit or may be composed of plural structural units such as MT unit, DT unit and TQ unit.

In view of heat resistance of the silicone-based compound, the content of $RSiO_{1.5}$ (T unit) as a structural unit is preferably 87.5% or more, and more preferably 90% or more in a molar ratio, based on the entire silicone-based compound. When the silicone-based compound contains a T unit in the amount within the above ratio, heat resistance of the silicone-based compound is improved and decomposition of the silicone-based compound is suppressed upon combustion, and thus flame retardancy of the resin composition can be improved.

Also, the content of a silanol group in the silicone-based compound is 2% or more and 10% or less, and preferably 3% or more and 8% or less, in terms of a weight ratio based on the entire silicone-based compound. As used herein, the content of a silanol group means the weight of an OH group combined with Si in the silicone-based compound.

When the content of a silanol group is adjusted within the range defined in the present invention, since the polyester-based resin is combined with the silicone-based compound to form a crosslinked structure upon combustion and carbonization of the polyester-based resin is promoted, dripping can be suppressed.

The content of a silanol group is not preferably less than the range defined in the present invention because the dripping-suppressing effect is lowered. On the other hand, the content of a silanol group is not preferably more than the range defined in the present invention, because the dripping-suppressing effect reaches an equilibrium state, but gelation occurs in case of melt-kneading with the polyester-based resin, thereby causing deterioration of physical properties and deterioration of processing characteristics. Also, when used for a fiber structure object, deterioration of physical properties and deterioration of processing characteristics are caused by gelation in case of melt-spinning.

The content of a silanol group can be calculated from a ratio of an area of a peak (integrated value) of $SiO_{2,0}$, $RSiO_{1.5}$, $R_2SiO_{1.0}$ and $R_3SiO_{0.5}$ derived from a structure having no silanol group to a peak (integrated value) of $Si(OH)_4$, $SiO_{0.5}(OH)_3$, $SiO_{1.0}(OH)_2$, $SiO_{1.5}(OH)$, $RSi(OH)_3$, $RSiO_{0.5}(OH)_2$, $RSiO_{1.0}(OH)$, $R_2Si(OH)_2$, $R_2SiO_{0.5}(OH)$ and $R_3Si(OH)$ derived from a structure having a silanol group in $^{29}$Si-NMR.

For example, when the silicone-based compound is composed of only $RSiO_{1.5}$ and $RSiO_{1.0}$ (OH), if a ratio of an integrated value of $RSiO_{1.5}$ to $RSiO_{1.0}$ (OH) is from 1.5 ($RSiO_{1.5}$) : 1.0 ($RSiO_{1.0}$ (OH)), the content of a silanol group can be obtained by the following equation 1.

[Equation 1]

$$\text{Content of Silanol Group (wt\%)} = \frac{\text{Ratio of Integrated Value of } (17 \times RSiO_{1.0}(OH)}{\left[\begin{array}{c}\text{Molecular Weight of } RSiO_{1.0}(OH) \times \text{Ratio of Integrated Value of } RSiO_{1.0}(OH) + \\ \text{Molecular Weight of } RSiO_{1.5} \times \text{Ratio of Integrated Value of } RSiO_{1.5}\end{array}\right]} \times 100$$

$$= 17 \times 1.0 / (138 \times 1.0 + 129 \times 1.5) \times 100$$

$$= 5.13$$

Except for the case where the silicone-based compound is composed only of a Q unit as a structural unit, it has an organic group combined with a Si element. As used herein, the organic group includes, for example, a hydrogen group, a hydroxyl group, a hydrocarbon group and an aromatic hydrocarbon group.

Specific examples of the hydrocarbon group include a methyl group, an ethyl group, a propyl group, a butyl group, a vinyl group, an allyl group, a methacryl group and a cyclohexyl group. Examples of the aromatic hydrocarbon group include a phenyl group and a naphthyl group.

In view of general-purpose properties and heat resistance of the silicone-based compound, the organic group is preferably a group selected from a hydroxyl group, a methyl group and a phenyl group, and more preferably a phenyl group. The content of the phenyl group is preferably 85% or more in terms of a molar ratio based on the entire organic groups contained in the silicone-based compound.

In view of dispersibility in the polyester-based resin composition, a polystyrene equivalent weight average molecular weight determined using GPC of the silicone-based compound is preferably 500 or more and 100,000 or less, and more preferably 1,000 or more and 10,000 or less. When the weight average molecular weight is more than the above range, viscosity of the silicone-based compound is high in case of melt-kneading and dispersibility of the silicone-based compound may deteriorate. Also when the weight average molecular weight is less than the above range, dispersibility of the silicone-based compound may deteriorate. When dispersibility deteriorates, spinnability may deteriorate in case of using in a fiber structure object.

In view of the dripping-suppressing effect and flame retardancy, a mixing ratio of the silicone-based compound to the polyester-based resin is preferably 100:0.1 or more and less than 100:10, and more preferably 100:1 or more and less than 100:7, in terms of a weight ratio.

The polyester-based resin of the present invention is preferably selected from polyethylene terephthalate, polypropylene terephthalate, polybutylene terephthalate, polyethylene naphthalate and polylactic acid. The polylactic acid includes poly-L-lactic acid and poly-D-lactic acid. These polylactic acids may be used alone or in combination.

The resin composition preferably contains a polyester-based resin as a main component and more preferably the content of the polyester-based resin is 70% or more in terms of a weight ratio based on the resin composition. However, it is also possible to use other organic polymers, or a blend, an alloy or composite with an inorganic compound as long as the dripping-suppressing effect, flame retardancy, physical properties of the resin composition and processing characteristics do not deteriorate. In case of used in a fiber structure object, mixed spinning or combining with fibers made of other resins can also be performed.

Also, the polyester-based resin composition of the present invention may contain additives, for example, hindered phenol-based, amine-based, phosphite-based and thioester-based antioxidants; benzotriazole-based, benzophenone-based and cyanoacrylate-based ultraviolet absorbers; infrared absorbers; cyanine-based, stilbene-based, phthalocyanine-based, anthraquinone-based, perinone-based and quinacridon-based organic pigments; inorganic pigments; fluorescent whitening agents; calcium carbonate, silica and titanium oxide particles; antibacterial agents; and antistatic agents.

The polyester-based resin composition of the present invention is preferably formed into a tip, a flake or a powder. The polyester-based resin in such a form can be preferably used with efficiency in case of transporting the polyester-based resin composition or supplying it to a melt-molding machine.

The polyester-based resin composition of the present invention can be preferably used as a resin molded article after molding. It can be preferably used as molded articles which require the dripping-suppressing effect and flame retardancy, for example, interior and exterior materials of vehicles, housings of electric appliances and covers of electric circuits, but is not limited to these applications.

Also, the polyester-based resin composition of the present invention can be preferably used as a fiber structure object.

The fiber structure object of the present invention may be in the form of a filament or a staple. As a filament for use in clothing applications, a multifilament having a single filament fineness within a range from 0.1 dtex to several tens of dtex, a total fineness within a range from 50 dtex to 300 dtex, and the number of filaments within a range from

10 to 100 is preferably used.

As a filament for use in industrial applications, a multifilament having a single filament fineness within a range from several tens of dtex to several hundreds of dtex, a total fineness within a range from several tens of dtex to several hundreds of dtex, and the number of filaments within a range from 10 to 100 is preferably used.

Also, the fiber structure object may be in the form of clothes such as woven fabric, knit fabric and nonwoven fabric.

In case of clothing applications, several tens of dtex to several hundreds of dtex having a single structure such as three foundation weave or derivative structure, or a double structure such as flat double structure or weft double structure. At this time, the mass of the woven fabric is preferably 50 g/$m^2$ or more and 500 g/$m^2$ or less.

As a filament for industrial applications, similar to clothing applications, a multifilament can be used as a woven fabric after weaving. At this time, the mass of the fiber structure object is 300 g/$m^2$ or more and 1,500 g/$m^2$ or less.

Also, the polyester-based fiber structure object of the present invention is not influenced by post processing and therefore can be subjected to various post processings. For example, functions such as water repellency, hydrophilicity, antistatic properties, deodorizing properties, antimicrobial properties and hyperchromicity can be imparted by processing in a bath, exhaustion processing, coating processing, pad-dry processing and pad-steam processing.

The polyester-based fiber structure object of the present invention can be preferably used as textile products which require the dripping-suppressing effect and flame retardancy, for example, textile products which are capable of suppressing dripping in vehicle interior materials such as car sheet and car mat, interior materials such as curtain, carpet and chair covering material, and clothing materials, and also exhibit flame retardancy.

Another aspect of the present invention is a resin composition comprising a base material resin, a silicone-based compound containing at least structural unit represented by $RSiO_{1.5}$ (R is an organic group), and a compound having an imide structure.

As used herein, the base material resin means a resin except for a silicone-based resin and a resin having an imide structure. The base material resin is preferably a thermoplastic resin in view of processing properties and, for example, a resin selected from polyester, polyamide and polyolefin can be preferably used.

The polyester is preferably a polyester selected from polyethylene terephthalate, polypropylene terephthalate, polybutylene terephthalate, polyethylene naphthalate and polylactic acid. The polylactic acid includes poly-L-lactic acid and poly-D-lactic acid. These polylactic acids may be used alone or in combination.

Examples of the polyamide include nylon 6, nylon 66, nylon 610, nylon 612, nylon 11 and nylon 12, each having a repeated structure of -CONH-.

Examples of the polyolefin include polyethylene and polypropylene.

The resin composition preferably contains the base material resin as a main component, and the content is more preferably 50% or more, and still more preferably 70% or more, in terms of a weight ratio based on the resin composition. However, as long as ripping-suppressing effect, flame retardancy, physical properties of the resin composition and processing characteristics do not deteriorate, it is also possible to use other organic polymers, or a blend, an alloy, or a composite with an inorganic compound. In case of using in a fiber structure object, mixed spinning or combining with fibers made of other resins can also be performed.

The silicone-based compound is a silicone-based compound containing at least $RSiO_{1.5}$ (T unit) as a structural unit. In view of heat resistance of the silicone-based compound, the content of a structural unit of $RSiO_{1.5}$ is preferably 30% or more, and more preferably 60% or more, in terms of a molar ratio based on the entire silicone-based compound. When the silicone-based compound contains a T unit, heat resistance of the silicone-based compound is improved and decomposition of the silicone-based compound can be suppressed upon combustion, and thus flame retardancy can be improved.

Also, the content of a silanol group of the silicone-based compound is preferably 2% or ore 10% or less, more preferably 3% or more and 8% or less, still more preferably 3% or more and 7% or less, in terms of a weight ratio based on the entire silicone-based compound. As used herein, the content of a silanol group means the weight of an OH group combined with Si in the silicone-based compound.

The content of a silanol group can be measured in $^{29}$Si-NMR as described above.

When the content of a silanol group is adjusted within the above range, since a resin, a compound having an imide structure and a silicone-based compound are combined to form a crosslinked structure upon combustion and carbonization of the resin composition is promoted, dripping can be suppressed.

The content of a silanol group is not preferably less than the above range because the dripping-suppressing effect is lowered. On the other hand, when the content of a silanol group is more than the above range, the dripping-suppressing effect may reach an equilibrium state. When the content of a silanol group is more than the above range, in case of using in a fiber structure object, gelation occurs in case of melt-kneading with the polyester-based resin, thereby causing deterioration of physical properties and deterioration of processing characteristics, unpreferably.

Except for the case where the silicone-based compound is composed only of a Q unit as a structural unit, it has an organic group combined with a Si element. As used herein, the organic group includes, for example, a hydrogen group, a hydroxyl group, a hydrocarbon group and an aromatic hydrocarbon group.

Specific examples of the hydrocarbon group include a methyl group, an ethyl group, a propyl group, a butyl group, a vinyl group, an allyl group, a methacryl group and a cyclohexyl group. Examples of the aromatic hydrocarbon group include a phenyl group and a naphthyl group.

In view of general-purpose properties and heat resistance of the silicone-based compound, the organic group is preferably a group selected from a hydroxyl group, a methyl group and a phenyl group, and more preferably a phenyl group. The content of the phenyl group is preferably 20% or more, more preferably 30% or more, and still more preferably 50% or more, in terms of a molar ratio based on the entire organic groups contained in the silicone-based compound.

In view of dispersibility in the polyester-based resin composition, a polystyrene equivalent weight average molecular weight determined using GPC of the silicone-based compound is preferably 500 or more and 100,000 or less, and more preferably 1,000 or more and 10,000 or less. When the weight average molecular weight is more than the above range, viscosity of the silicone-based compound is high in case of melt-kneading and dispersibility of the silicone-based compound may deteriorate. Also when the weight average molecular weight is less than the above range, dispersibility of the silicone-based compound may deteriorate. When dispersibility deteriorates, spinnability may deteriorate in case of using in a fiber structure object.

Also, a compound having an imide structure means a compound having a structure of -CO-NR'-CO- (R' is an organic group) in a molecular structure.

The compound having an imide structure preferably has thermoplasticity in view of processing properties. A glass transition temperature is preferably 130°C or higher and 300°C or lower, and more preferably 130°C or higher and 250°C or lower.

Specific examples of the compound having an imide structure include polyimide, polyamideimide and polyetherimide.

This compound having an imide structure preferably contains a structural unit represented by the following general formula:

[Chemical Formula 1]

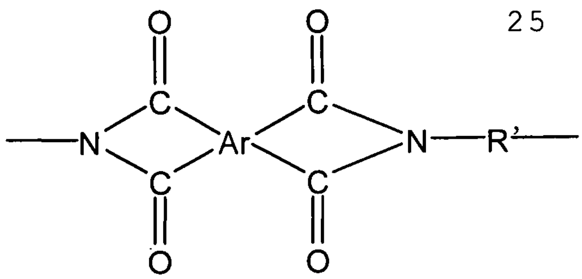

25

Wherein Ar represents an aromatic group having 6 to 42 carbon atoms, and R' represents a divalent organic group selected from the group consisting of an aromatic group having 6 to 30 carbon atom, an aliphatic group having 2 to 30 carbon atom and an alicyclic group having 4 to 30 carbon atoms.

In the above general formula, Ar includes, for example,

[Chemical Formula 2]

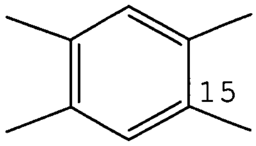
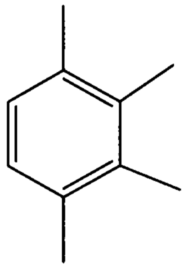
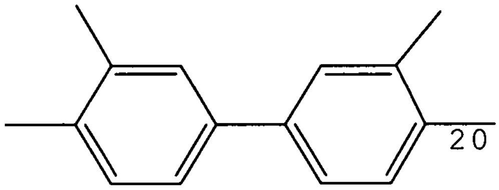
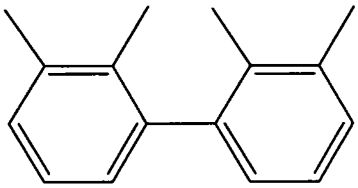
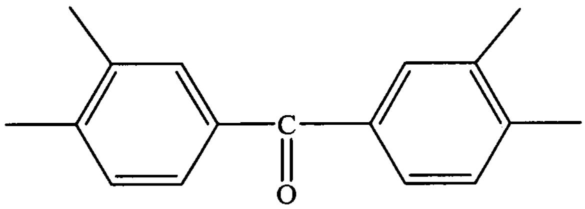
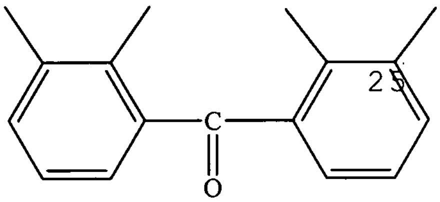
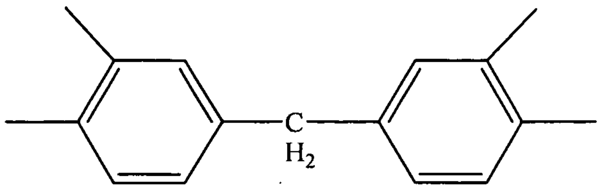
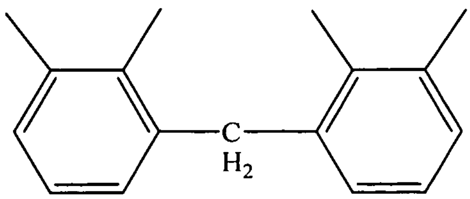
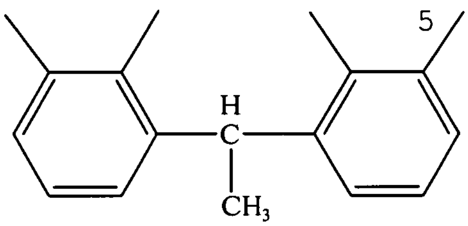
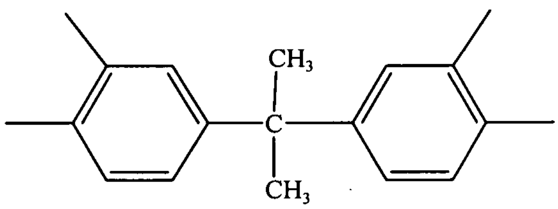
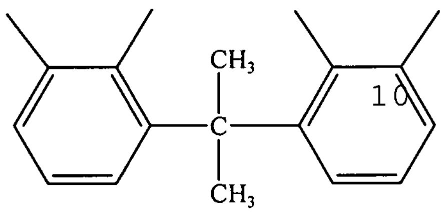

and

[Chemical Formula 3]

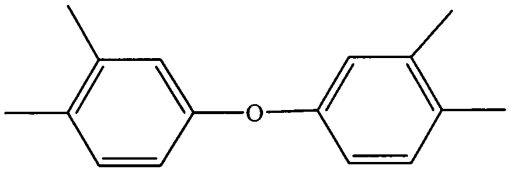

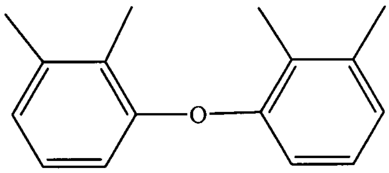

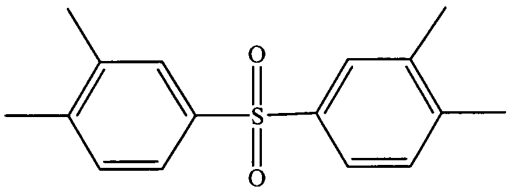

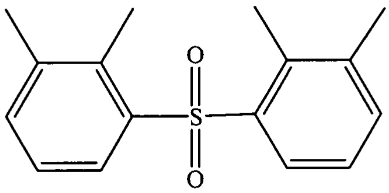

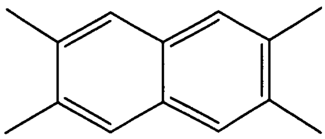

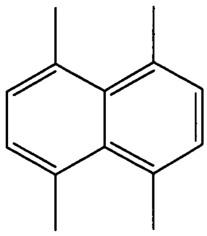

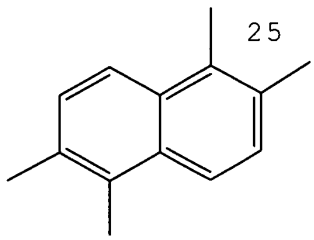

R' includes, for example,

[Chemical Formula 4]

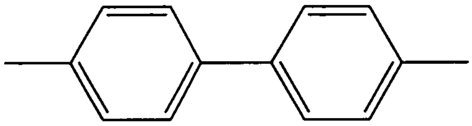

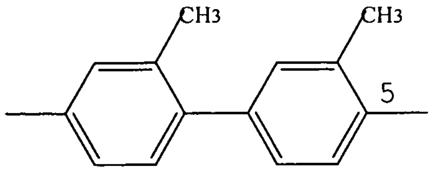

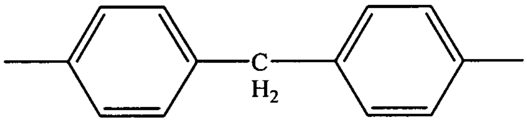

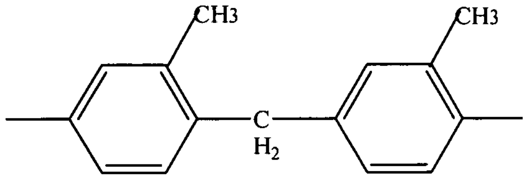

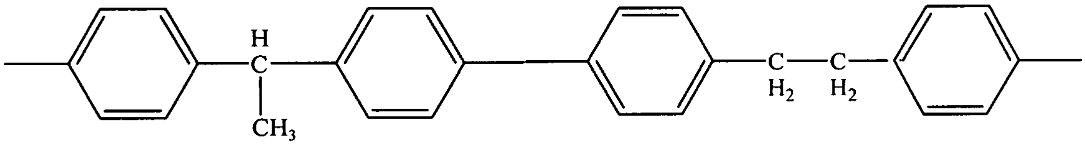

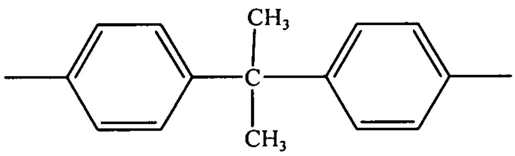

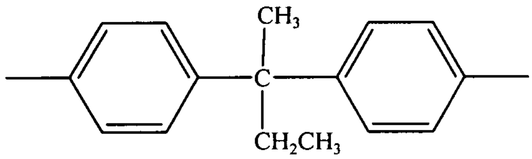

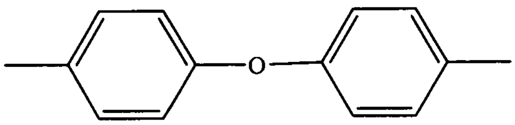

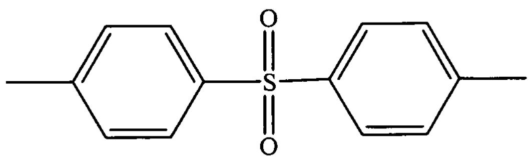

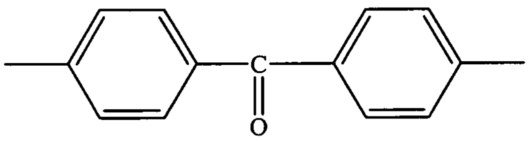

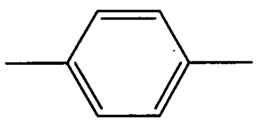

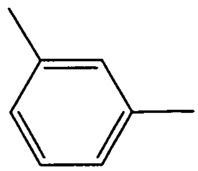

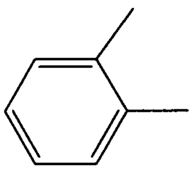

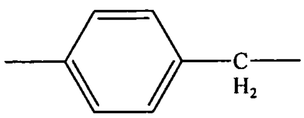

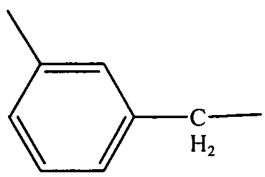

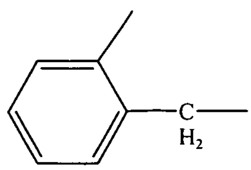

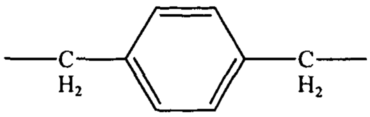
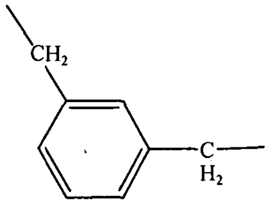
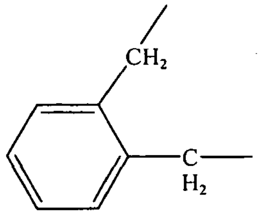

and

[Chemical Formula 5]

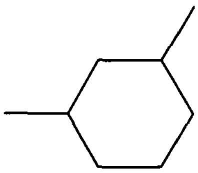
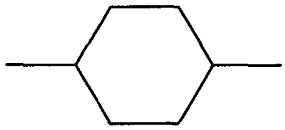
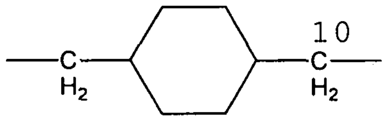
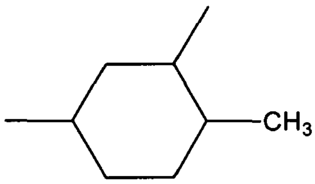
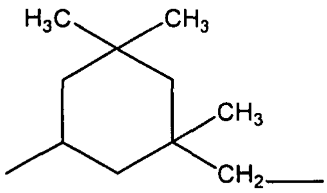
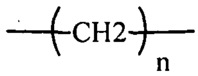

wherein n is from 2 to 30.

One or more kinds of these substituents may exist in a polymer chain as long as the effect of the present invention is not adversely affected.

In view of melt-moldability with the thermoplastic resin and handling properties, the compound having an imide structure is not specifically limited, but is preferably polyetherimide having an ether bond in a polyimide constituent component represented by the following general formula:

[Chemical Formula 6]

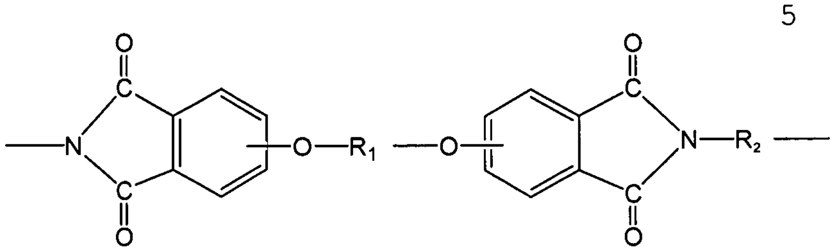

Wherein $R^1$ represents a divalent organic group selected from the group consisting of an aromatic group, an aliphatic group and an alicyclic group, each having 2 to 30 carbon atoms, and $R^2$ represents the same divalent organic

group as in R'.

Preferable examples of $R^1$ and $R^2$ include aromatic groups represented by the following group of general formulas.

[Chemical Formula 7]

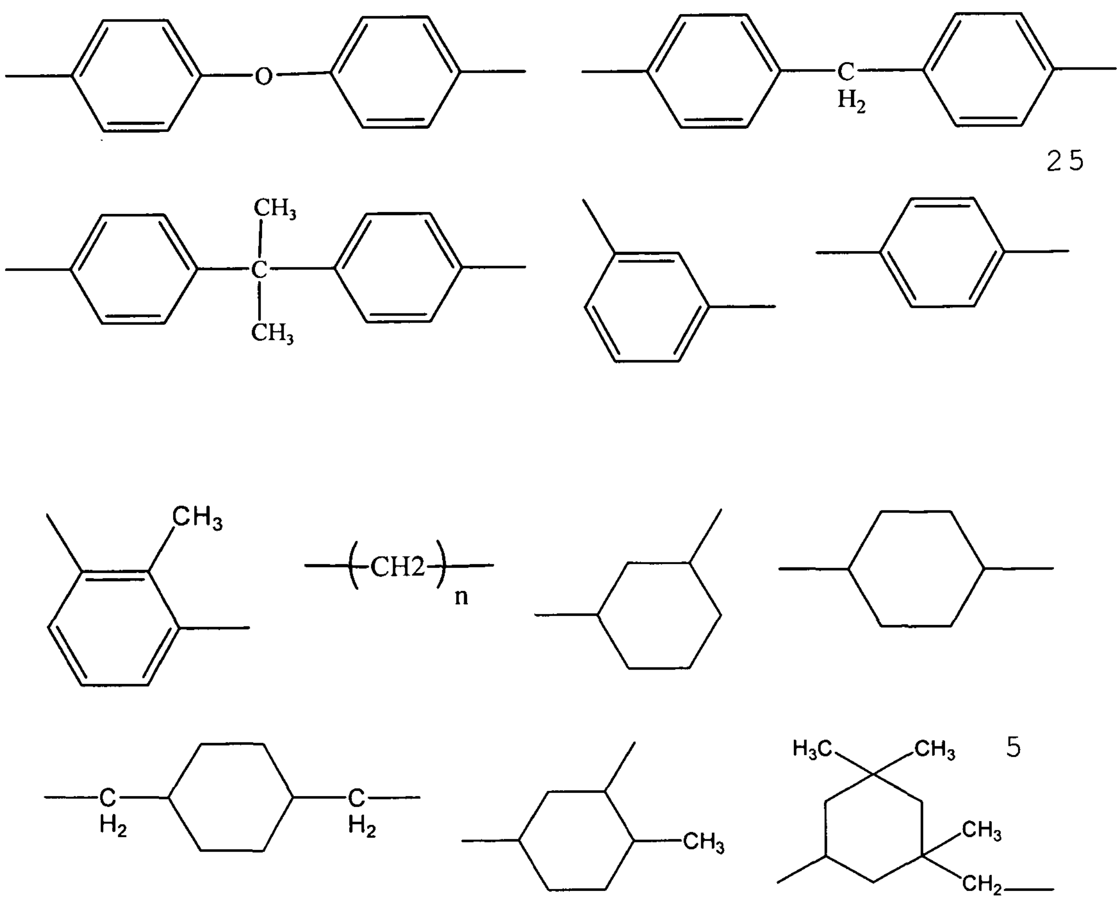

In view of compatibility with the thermoplastic resin (A) and melt-moldability, 2,2-bis[4-(2,3-dicarboxyphenoxy) phenyl]propane dianhydride and m-phenylenediamine, each containing a structural unit represented by the following formula, or a condensate with p-phenylenediamine is preferable.

[Chemical Formula 8]

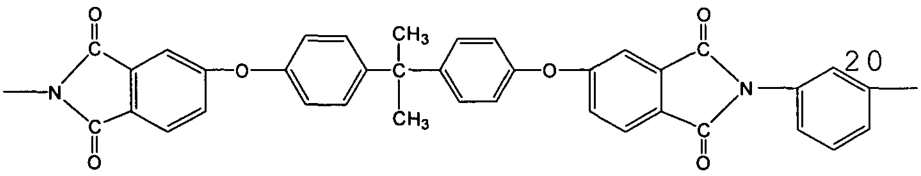

or

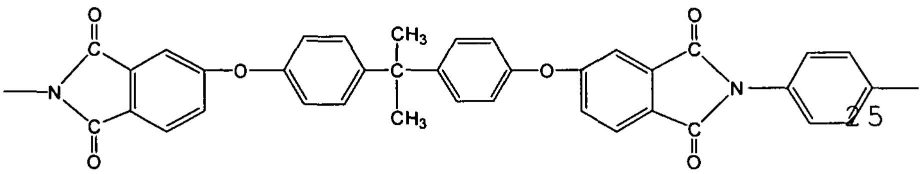

Polyetherimide containing this structural unit is commercially available from GE Plastics Co. under the trade name of "ULTEM®". The polyetherimide containing the structural unit (represented by the former formula) including a unit derived from m-phenylenediamine includes, for example, "ULTEM® 1010" and "ULTEM® 1040". Also, the polyetherimide containing the structural unit (represented by the latter formula) including a unit derived from p-phenylenediamine includes, for example, "ULTEM® CRS5000".

In view of melt-moldability with the thermoplastic resin and handling properties, other preferable examples of the compound having an imide structure include compounds in which Ar in the above formula is selected from the followings:

[Chemical Formula 9]

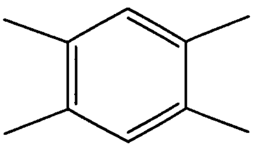

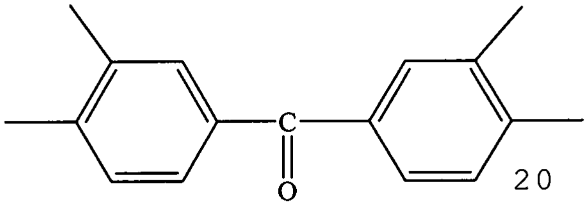

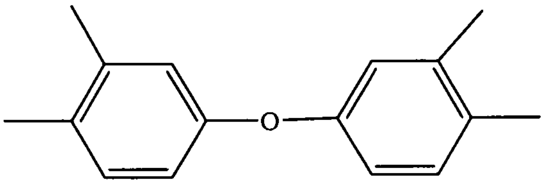

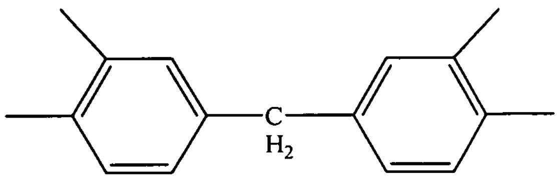

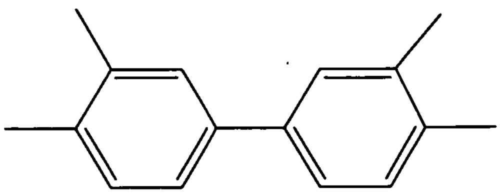

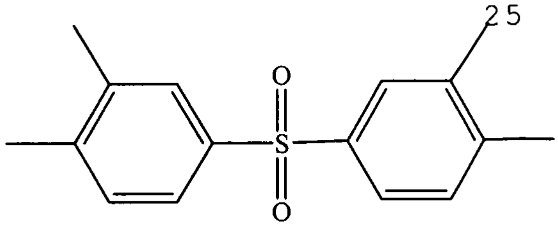

and R' is selected from the followings:

[Chemical Formula 10]

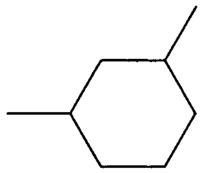
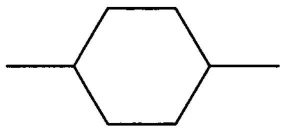
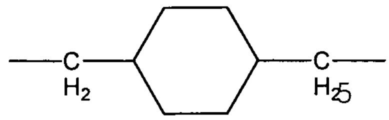
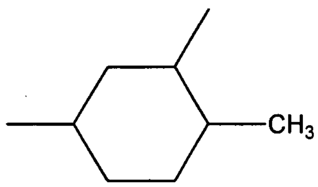
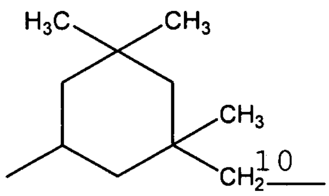
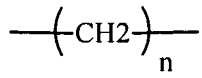

wherein the compound having an imide structure is a polymer.

This polyimide can be prepared by a known method. For example, it is obtained by dehydration condensation of a tetracarboxylic acid as a raw material capable of deriving the above Ar and/or an acid anhydride thereof and one or more kinds of compounds selected from the group consisting of an aliphatic primary diamine capable of deriving the above Ar and/or an aromatic primary diamine. The method includes, for example, a method of obtaining polyamide acid, followed by ring closure with heating can be used. Alternatively, the method includes a method for chemical ring closure in which an acid anhydride and a chemical ring-closing agent such as pyridine or carbodiimide are used, and a polymerization method in which decarboxylation is performed by heating the above tetracarboxylic anhydride and diisocyanate capable of deriving the above Ar.

When the resin composition contains a compound having an imide structure and a silicone-based compound, a char layer can be efficiently formed from a silicone-based compound, a compound having an imide structure and a thermoplastic resin base material upon combustion, and dripping-suppressing effect and flame retardancy can be remarkably improved as compared with the case of containing a silicone-based compound or a compound having an imide structure alone.

In view of the dripping-suppressing effect and flame retardancy, a ratio of the content of the silicone-based compound to that of the compound having an imide structure is preferably within a range from 5 (the silicone-based compound) :95 (the compound having an imide structure) to 95:5, and more preferably from 10:90 to 90:10, in terms of a weight ratio.

In view of dripping-suppressing effect and flame retardancy, a composition ratio of the present invention is as follows, that is, a weight ratio is preferably within a range from 94 (the base material resin):1 (the silicone-based compound):5 (the compound having an imide structure) to 40:20:40, and more preferably from 90:3:7 to 70:10:20.

Also, the polyester-based resin composition of the present invention may contain additives, for example, hindered phenol-based, amine-based, phosphite-based and thioester-based antioxidants; benzotriazole-based, benzophenone-based and cyanoacrylate-based ultraviolet absorbers; infrared absorbers; cyanine-based, stilbene-based, phthalocyanine-based, anthraquinone-based, perinone-based and quinacridon-based organic pigments; inorganic pigments; fluorescent whitening agents; calcium carbonate, silica and titanium oxide particles; antibacterial agents; and antistatic agents.

The resin composition of the present invention is preferably formed into a tip, a flake or a powder. The resin composition in such a form can be preferably used with efficiency in case of transporting the resin composition or supplying it to a melt-molding machine.

The resin composition of the present invention can be preferably used as a resin molded article after molding. It can be preferably used as molded articles which require the dripping-suppressing effect and flame retardancy, for example, interior and exterior materials of vehicles, housings of electric appliances and covers of electric circuits, but is not limited to these applications.

Also, the resin composition of the present invention can be preferably used as a fiber structure object.

The fiber structure object of the present invention may be in the form of a filament or a staple. As a filament

for use in clothing applications, a multifilament having a single filament fineness within a range from 0.1 dtex to several tens of dtex, a total fineness within a range from 50 dtex to 300 dtex, and the number of filaments within a range from 10 to 100 is preferably used.

As a filament for use in industrial applications, a multifilament having a single filament fineness within a range from several tens of dtex to several hundreds of dtex, a total fineness within a range from several tens of dtex to several hundreds of dtex, and the number of filaments within a range from 10 to 100 is preferably used.

Also, the fiber structure object may be in the form of clothes such as woven fabric, knit fabric and nonwoven fabric.

For Example, in case of clothing applications, several tens of dtex to several hundreds of dtex having a single structure such as three foundation weave or derivative structure, or a double structure such as flat double structure or weft double structure. At this time, the mass of the woven fabric is preferably 50 $g/m^2$ or more and 500 $g/m^2$ or less.

As a filament for industrial applications, similar to clothing applications, a multifilament can be used as a woven fabric after weaving. At this time, the mass of the fiber structure object is 300 $g/m^2$ or more and 1,500 $g/m^2$ or less.

Also, the fiber structure object of the present invention is not influenced by post processing and therefore can be subjected to various post processings. For example, functions such as water repellency, hydrophilicity, antistatic properties, deodorizing properties, antimicrobial properties and hyperchromicity can be imparted by processing in a bath, exhaustion processing, coating processing, pad-dry processing and pad-steam processing.

The fiber structure object of the present invention can be preferably used as textile products which require the dripping-suppressing effect and flame retardancy, for example, textile products which are capable of suppressing dripping in vehicle interior materials such as car sheet and car mat, interior materials such as curtain, carpet and chair covering material, and clothing materials, and also exhibit flame retardancy.

Another aspect of the present invention is a polyester-based fiber structure comprising a polyester-based resin, a silicone-based compound and a flame retardant element, wherein the silicone-based compound contains at least a structural unit represented by $RSiO_{1.5}$ (R is an organic group), the content of the silicone-based compound is 0.5% or more and 30% or less in terms of a weight ratio based in the resin composition, and the content of the flame retardant element is 1,000 ppm or more and 50, 000 ppm or less in the resin composition.

The silicone-based compound is a silicone-based compound containing at least $RSiO_{1.5}$ (T unit) as a structural unit. In view of heat resistance of the silicone-based compound, the content of a structural unit of $RSiO_{1.5}$ is preferably 50% or more, and more preferably 85% or more, in terms of a molar ratio based on the entire silicone-based compound. When the silicone-based compound contains a T unit, heat resistance of the silicone-based compound is improved and decomposition of the silicone-based compound can be suppressed upon combustion, and thus flame retardancy can be improved.

Also, the content of a silanol group of the silicone-based compound is preferably 2% or ore 10% or less, and more preferably 3% or more and 8% or less, in terms of a weight ratio based on the entire silicone-based compound. As used hereon, the content of a silanol group means the weight of an OH group combined with Si in the silicone-based compound.

The content of a silanol group can be measured in $^{29}Si$-NMR as described above.

When the content of a silanol group is adjusted within the above range, since the polyester is combined with the silicone-based compound to form a crosslinked structure upon combustion and carbonization of the polyester-based resin is promoted, dripping can be suppressed.

The content of a silanol group is not preferably less than the above range because the dripping-suppressing effect may reach an equilibrium state. On the other hand, when the content of a silanol group is more than the above range, gelation occurs in case of melt-kneading the polyester-based resin, thereby causing deterioration of physical properties and deterioration of processing characteristics, unpreferably.

Except for the case where the silicone-based compound is composed only of a Q unit as a structural unit, it has an organic group combined with a Si element. As used herein, the organic group includes, for example, a hydrogen group, a hydroxyl group, a hydrocarbon group and an aromatic hydrocarbon group.

Specific examples of the hydrocarbon group include a methyl group, an ethyl group, a propyl group, a butyl group, a vinyl group, an allyl group, a methacryl group and a cyclohexyl group.

Examples of the aromatic hydrocarbon group include a phenyl group and a naphthyl group.

In view of general-purpose properties and heat resistance of the silicone-based compound, the organic group is preferably a group selected from a hydroxyl group, a methyl group and a phenyl group, and more preferably a phenyl group. The content of the phenyl group is preferably 20% or more, more preferably 50% or more, still more preferably 85% or more, and most preferably 99% or more, in terms of a molar ratio based on the entire organic groups contained in the silicone-based compound.

In view of dispersibility in the polyester-based resin composition, a polystyrene equivalent weight average molecular weight determined using GPC of the silicone-based compound is preferably 500 or more and 100,000 or less, and more preferably 1,000 or more and 10,000 or less. When the weight average molecular weight is more than the above range, viscosity of the silicone-based compound is high in case of melt-kneading and dispersibility of the silicone-based compound may deteriorate. Also when the weight average molecular weight is less than the above range, dispersibility of the silicone-based compound may deteriorate and thus spinnability may deteriorate. Even when the weight average molecular weight is less than the above range, dispersibility of the silicone-based compound deteriorates and thus spinnability may deteriorate.

In view of the dripping-suppressing effect and flame retardancy, the content of the silicone-based compound is preferably 0.5% or more and 30% or less, and more preferably 1% or more and 10% or less, in terms of a weight ratio based on the polyester-based fiber structure object.

The flame retardant element of the present invention is an element selected from a halogen element, an alkali metal element such as Na or K, an alkali earth metal element such as Mg or Ca, Zn, B, Al, N, P and Sb.

In view of flame retardancy, an element selected from a halogen element, N, P and Sb is preferable and, in view of environment, N or P is more preferable. These flame retardant elements may be used alone or in combination.

Specific examples of a compound containing P include phosphoric acid esters, phosphoric acids, phosphoric acid salts, phosphines, phosphazenes and inorganic phosphorus compound.

Specific examples of the phosphoric acid esters include a trialkyl phosphate such as trimethyl phosphate or triethyl phosphate; a triaryl phosphate such as triphenyl phosphate or tricresyl phosphate; an alkylaryl phosphate such as octyldiphenyl phosphate or lauryldiphenyl phosphate; resorcinolbis(diphenyl phosphate), resorcinolbis(di-2,6-xylenyl phosphate) and bisphenol bis(diphenyl phosphate).

Examples of the phosphoric acids include phosphoric acid, phosphorous acid, pyrophosphoric acid, polyphosphoric acid and metaphosphoric acid. Examples of the phosphoric acid salts include metal salts selected from salts of I-IV group elements of the Periodic Table, such as potassium salt, calcium salt, magnesium salt, zinc salt and lithium salt; and amine salts such as slats of ammonia, ethylenediamine, melamine, guanidine, urea, thiocarbazone and amino acid. Examples of the phosphines include triethylphosphine, triphenylphosphine, triethylphosphine oxide and triphenylphosphine oxide. Examples of the phosphazenes include an amidephosphazene oligomer and a phenoxyphosphazene oligomer. Examples of the inorganic phosphorus compound include red phosphorus and phosphorous pentasulphide. These compounds containing P may be used alone or in combination.

As the compound containing a flame retardant element, various known compounds can be used. Examples of the compound containing a P element include phosphoric acid ester-based compounds such as ADKSTAB® PFR and ADKSTAB® FP500 manufactured by Adeka Corporation and cyclic phosphonic acid ester (trade name K-19A) manufactured by Meisei Chemical Works, Ltd.; phosphoric acid salts such as sodium phosphate monobasic, sodium phosphate dibasic, sodium pyrophosphate and sodium tripolyphosphate manufactured by RINKAGAKU KOGYO CO., LTD.; amine salts of phosphoric acid salts, such as phosphoric acid guanidine (trade name AP-303), phosphoric acid guanylurea (trade name AP-405) and polyphosphoric acid melamine (MPP-B) manufactured by Sanwa Chemical Co., Ltd.; phosphazenes such as amidephosphazene oligomer (trade name SPS-100) manufactured by Otsuka Chemical Co., Ltd.; and inorganic phosphorus compounds such as red phosphorus (NOBARED 120UF) manufactured by RINKAGAKU KOGYO CO., LTD.

When the flame retardant element and the silicone-based compound are contained in the amount defined in the scope of the present invention, it is possible to provide a polyester-based fiber structure object which has remarkably improved dripping-suppressing effect and flame retardancy, and also causes no dripping in a combustion test in a JIS L 1091 A-4 method (vertical method).

This JIS L 1091 A-4 method (vertical method) is a method for a combustion test in which combustion is evaluated in the state of vertically holding a sample. In the JIS L 1091 A-4 method (vertical method), as compared with the test method in which combustion is evaluated by maintaining at 45° according to a JIS L 1091 D method, dripping frequently occurs and very high dripping-suppressing effect is required, and thus it can be said that the effect of the present invention is very excellent.

In view of flame retardancy, the polyester-based fiber structure object preferably contains 1,000 ppm or more and 50,000 ppm less of a flame retardant element in the present invention. The amount of the flame retardant element of less than the above range is not preferable because flame retardancy deteriorates. On the other hand, the amount of the flame retardant element of more than the above range is not preferable because flame retardancy reaches a nearly equilibrium state, but physical properties of the polyester-based fiber structure object deteriorates and processing characteristics deteriorates. The upper limit of the amount of the flame retardant element is more preferably 30,000 ppm or less, and still more preferably 10,000 ppm or less. The lower limit of the amount of the flame retardant element is more preferably 1,500 ppm or more.

The amount of the flame retardant element can be quantitatively measured by elemental analysis. Specific examples of elemental analysis include fluorescent X-ray analysis, ICP atomic emission spectrometry and atomic absorption spectrophotometry.

Also, the polyester-based fiber of the present invention is preferably a fiber made of a resin selected from polyethylene terephthalate, polypropylene terephthalate, polybutylene terephthalate, polyethylenenaphthalate and polylactic acid. Examples of the polylactic acid include poly-L-lactic acid and poly-D-lactic acid. These polylactic acids may

be used alone or in combination.

The fiber structure object preferably contains polyester-based fibers as a main component, and the content is more preferably 70% or more in terms of a weight ratio based on the fiber structure object. However, mixed spinning or combining with fibers made of other resins can be performed as long as dripping-suppressing effect, flame retardancy, physical properties of the resin composition and processing characteristics do not deteriorate.

Also, the polyester-based resin structure object of the present invention may contain additives, for example, hindered phenol-based, amine-based, phosphite-based and thioester-based antioxidants; benzotriazole-based, benzophenone-based and cyanoacrylate-based ultraviolet absorbers; infrared absorbers; cyanine-based, stilbene-based, phthalocyanine-based, anthraquinone-based, perinone-based and quinacridon-based organic pigments; inorganic pigments; fluorescent whitening agents; calcium carbonate, silica and titanium oxide particles; antibacterial agents; and antistatic agents.

The polyester-based fiber structure object of the present invention may be in the form of a filament or a staple. As a filament for use in clothing applications, a multifilament having a single filament fineness within a range from 0.1 dtex to several tens of dtex, a total fineness within a range from 50 dtex to 300 dtex, and the number of filaments within a range from 10 to 100 is preferably used.

As a filament for use in industrial applications, a multifilament having a single filament fineness within a range from several tens of dtex to several hundreds of dtex, a total fineness within a range from several tens of dtex to several hundreds of dtex, and the number of filaments within a range from 10 to 100 is preferably used.

Also, the fiber structure object may be in the form of clothes such as woven fabric, knit fabric and nonwoven fabric.

In case of clothing applications, several tens of dtex to several hundreds of dtex having a single structure such as three foundation weave or derivative structure, or a double structure such as flat double structure or weft double structure. At this time, a mass of the woven fabric is preferably 50 g/$m^2$ or more and 500 g/$m^2$ or less.

As a filament for industrial applications, similar to clothing applications, a multifilament can be used as a woven fabric after weaving. At this time, the mass of the fiber structure object is 300 g/$m^2$ or more and 1,500 g/$m^2$ or less.

Also, the polyester-based fiber structure object of the present invention is not influenced by post processing and therefore can be subjected to various post processings. For example, functions such as water repellency, hydrophilicity, antistatic properties, deodorizing properties, antimicrobial properties and hyperchromicity can be imparted by processing in a bath, exhaustion processing, coating processing, pad-dry processing and pad-steam processing.

The fiber structure object of the present invention can be preferably used as textile products which require the dripping-suppressing effect and flame retardancy, for example, textile products which are capable of suppressing dripping in vehicle interior materials such as car sheet and car mat, interior materials such as curtain, carpet and chair covering material, and clothing materials, and also exhibit flame retardancy.

The method of the present invention will now be described in detail.

The silicone-based compound can be prepared by conventional polycondensation. For example, the silicone-based compound is synthesized by condensing $R_3SiOCl$ (triorganochlorosilane), $R_2SiOCl_2$ (diorganodichlorosilane), $RSiOCl_3$ (monoorganotrichlorosilane), or $SiOCl_4$ (tetrachlorosilane) as a monomer in the presence of an acid or alkali catalyst. According to a molar ratio of the objective M, D, T or Q unit, the molar ratio of raw materials such as $R_3SiOCl$ (corresponding to an M unit, $R_2SiOCl_2$ (corresponding to a D unit), $RSiOCl_3$ (corresponding to a T unit) and $SiOCl_4$ (corresponding to a Q unit) is adjusted.

Also, the content of the organic group R in the silicone-based compound is influenced by that of the organic group R in the above monomer. Therefore, the content of the phenyl group in the silicone-based compound can be adjusted by substituting R of the above monomer with a predetermined amount of the phenyl group.

The content of the silanol group in the silicone-based compound can be controlled by the reaction time. The content of the silanol group can also be controlled by reacting $R_3SiOCl$ or $R_3SiOH$ as a sequestering agent with the silanol group. The content of the silanol group can be measured by $^{29}$Si-NMR as described above.

The weight average molecular weight of the silicone-based compound can be controlled by the reaction time. The polystyrene equivalent molecular weight determined using gel permeation chromatography (GPC) can be calculated.

Examples of the method of introducing a silicone-based compound, a compound having an imide structure and a compound containing a flame retardant element into a fiber structure object include, but are not limited to, a method of adding in case of polymerizing a base material resin, a method of dissolving a base material resin and these compounds in a solvent, followed by mixing and further drying, a method of melt-mixing a base material resin and these compounds using a kneader such as twin screw extruder or Banbury mixer, and a method of spinning to obtain a fiber structure object and introducing these compounds through post processing.

With respect to the silicone-based compound and the compound having an imide structure, since a resin composition containing them dispersed therein can be stably prepared, the a method of melt-mixing a base material resin and these compounds using a kneader such as twin screw extruder or Banbury mixer is preferable.

With respect to the compound containing a flame retardant element, the method of spinning to obtain a fiber structure object and introducing these compounds through post processing is preferable because the production cost

can be reduced.

The method for producing a fiber structure object will now be described.

The method for producing a fiber structure object includes, for example, a method using a melt-spinning machine.

For example, a fiber structure object can be obtained by cutting a resin composition obtained by the above method into tips of 3 mm square, charging the tips of 3 mm square in a hopper of a melt-spinning machine, and melt-spinning them at a temperature of a melting point or higher of a base material resin.

Also, a method of introducing a compound containing a flame retardant element into a fiber structure object through post processing.

For example, the compound containing a flame retardant element can be introduced into the fiber structure object through processing in a bath, a pad-dry-cure method or a pad-steam-cure method.

Specifically, description will be made with respect to the case where a fiber containing polyethylene terephthalate and silicone-based compound is formed through melt-spinning and a woven fabric obtained by weaving the resulting fiber is used as a base material. First, stains such as oil solution adhered onto fibers of the woven fabric serving as the base material are removed by cleaning in a soap step. Next, after intermediate setting at 150 to 200°C for 0.1 to 2 minutes using a pin tenter, a dip/nip treatment of a solution which contains a compound containing aflame retardant element is performed using a mangle. Furthermore, drying is performed at 100 to 130°C for 1 to 5 minutes using a pin tenter and curing is performed at 130 to 200°C for 0.5 to 5 minutes using a pin tenter, thereby making it possible to coat a fiber structure object with the compound containing a flame retardant element.

The solution, which contains a compound containing aflame retardant element used in the above method, is preferably a solution having a concentrated adjusted within a range from 1 to 90%, which is prepared by dissolving the compound containing a flame retardant element in a solvent capable of dissolving the compound.

The present invention will now be described in more detail by way of examples.

## EXAMPLES

First, silicone-based compounds were prepared in Examples and Comparative Examples in the following manner to obtain silicone-based compounds 1 to 14 shown in Table 1.

<Adjustment of Content of M, D, T and Q Units>

$R_3SiOCl$ (corresponding to $R_3SiO_{0.5}$) , $R_2SiOCl_2$ (corresponding to $R_2SiO_{1.0}$), $RSiOCl_3$ (corresponding to $RSiO_{1.5}$) and $SiOCl_4$ (corresponding to $SiO_{2.0}$) were mixed in a molar ratio of the respective structural units shown in Table 1 and hydrolyzed with water, and then hydrochloric acid generated was removed by methanol. Then, the reaction product was condensed using potassium hydroxide as a catalyst to obtain a silicone-based compound in which each content of $R_3SiO_{0.5}$, $R_2SiO_{1.0}$, $RSiO_{1.5}$ and $SiO_{2.0}$ structural units is different.

<Adjustment of Content of Phenyl Group and Methyl Group>

Using raw materials in which each R moiety was substituted with a phenyl group or a methyl group, a silicone-based compound in which each content in terms of a molar ratio of the phenyl group and the methyl group is different was obtained.

<Adjustment of Content of Silanol Group>

The reaction time in case of condensing a silicone-based compound was adjusted to obtain a silicone-based compound. Using $CDCl_3$ as a solvent and TMS (tetramethylsilane) as a certified reference material, the measurement of the resulting silicone-based compound was performed by $^{29}$Si-NMR at the number of integrations of 256. The content of a silanol group (% by weight) was calculated from a ratio of an area of a peak (integrated value) of $SiO_{2.0}$, $RSiO_{1.5}$, $R_2SiO_{1.0}$ and $R_3SiO_{0.5}$ derived from a structure having no silanol group to an area of a peak (integrated value) of $Si(OH)_4$, $SiO_{0.5}(OH)_3$, $SiO_{1.0}(OH)_2$, $SiO_{1.5}$ (OH), $RSi(OH)_3$, $RSiO_{0.5}(OH)_2$, $RSiO_{1.0}(OH)$, $R_2Si(OH)_2$, $R_2SiO_{0.5}(OH)$ and $R_3Si(OH)$ derived from a structure having a silanol group.

<Measurement of Weight Average Molecular Weight>

The reaction time in case of condensing a silicone-based compound was adjusted to obtain a silicone-based compound. Using gel permeation chromatography (GPC) and using chloroform as an eluent, the measurement of the resulting silicone-based compound was performed under the conditions of a sample concentration of 1% by weight and a detector of RI, and then a polystyrene equivalent weight average molecular weight was calculated

[Table 1]

| Silicone-based compound used | $R_3SO_{0.5}$ (%) | $R_2SO_{1.0}$ (%) | $RSO_{1.5}$ (%) | $SO_{2.0}$ (%) | Methyl group (%) | Phenyl group (%) | Silanol group (%) | Molecular weight (Mw) |
|---|---|---|---|---|---|---|---|---|
| 1 | - | - | 100 | - | 0 | 100 | 4.9 | 5,308 |
| 2 | - | - | 100 | - | 30 | 70 | 5.1 | 5,112 |
| 3 | 2 | - | 90 | 8 | 0 | 100 | 3.4 | 5,902 |
| 4 | 2 | - | 90 | 8 | 30 | 70 | 3.9 | 5,883 |
| 5 | - | 30 | 70 | - | 0 | 100 | 4.2 | 5,434 |
| 6 | - | 30 | 70 | - | 30 | 70 | 3.8 | 5,290 |
| 7 | 2 | 48 | 50 | - | 0 | 100 | 3.4 | 6,112 |
| 8 | 2 | 48 | 50 | - | 30 | 70 | 3.1 | 6,310 |
| 9 | - | - | 100 | - | 0 | 100 | 1.8 | 5,362 |
| 10 | 2 | - | 90 | 8 | 0 | 100 | 1.1 | 6,208 |
| 11 | - | 30 | 70 | - | 0 | 100 | 1.2 | 5,542 |
| 12 | 2 | 48 | 50 | - | 0 | 100 | 1.1 | 5,113 |
| 13 | - | 100 | - | - | 15 | 85 | 3.5 | 4,983 |
| 14 | - | 100 | - | - | 100 | 0 | 3.2 | 4,891 |

Combustion in the respective Examples was evaluated by the following procedures.

<Method for Evaluation of Dripping Properties of Resin Composition>

A flat plate measuring 125 mm ± 5 mm in length, 13.0 mm ± 0.5 mm in width and 3 mm in thickness, as a specimen, was produced and the number of drippings after flame contact for 10 seconds was evaluated in accordance with 20 mm vertical combustion test (UL94V) defined by Underwriters Laboratories.

<Method (1) for Evaluation of Dripping Properties of Fiber Structure Object>

A fiber structure object measuring 100 mm in length and 1 g in mass, as a specimen, was produced and the number of drippings after flame contact was evaluated in accordance with a JIS L 1091 D method.

<Method (2) for Evaluation of Dripping Properties of Fiber Structure Object>

A fiber structure object measuring 300 mm in length and 70 mm in width, as a specimen, was produced and the number of drippings after flame contact was evaluated in accordance with a JIS L 1091 A-4 method.

<Measurement of Oxygen Index (LOI)>

In the evaluation of a resin composition, a flat plate measuring 150 mm in length, 6.5 mm ± 0.5 mm in width and 3 mm in thickness, as a specimen, was produced. In the evaluation of a fiber structure object, a fiber cloth measuring 150 mm in length and 60 mm in width was produced and an oxygen index was determined in accordance with JIS K7201 (Method for Combustion Test of Polymer Material Using Oxygen Index Method).

<Method for Measurement of Flame Retardant Element>

Using a fluorescent X-ray analysis method, the content of a P element was measured.

Examples 1 to 8, Comparative Examples 1 to 5

As a base material resin, polyethylene terephthalate having an inherent viscosity (IV) of 0.65 was used. Using silicone-based compounds 1 to 12 shown in Table 1, a resin composition containing polyethylene terephthalate and a silicone-based compound in a mixing ratio of polyethylene terephthalate to the silicone-based compound of 95% by weight: 5% by weight was obtained, as shown in Table 2. Under the conditions of a kneading temperature of 275°C, L/D of 30 and a screw speed of 300 rpm, kneading was performed using a twin screw extruder.

Then, the resulting resin composition was molded under the conditions according to the above-mentioned method for evaluation of dripping properties of the resin composition, and then the evaluation of dripping properties and the measurement of an oxygen index (LOI value) as an indicator of flame retardancy were performed.

Since composition of Comparative Example 1 contains no silicone-based compound, the composition was directly molded without kneading, and then evaluation of dripping properties and the measurement of the oxygen index were performed.

As a result, as shown in Table 2, the compositions of Examples 1 to 8 caused no dripping and exerted higher dripping-suppressing effect as compared with the compositions of Comparative Examples 1 to 5. Also, the compositions of Examples 1 to 8 showed a higher LOI value as an indicator of flame retardancy as compared with the compositions of Comparative Examples 1 to 5, and were excellent in dripping-suppressing effect and flame retardancy.

[Table 2]

| | Silicone-based compound used | $R_3SO_{0.5}$ (%) | $R_2SO_{1.0}$ (%) | $RSO_{1.5}$ (%) | $SO_{2.0}$ (%) | Methyl group (%) | Phenyl group (%) | Silanol group (%) | Molecular weight (Mw) | Number of drippings | Flame retardancy (LOI) |
|---|---|---|---|---|---|---|---|---|---|---|---|
| Example 1 | 1 | - | - | 100 | - | 0 | 100 | 4.9 | 5,308 | 0 | 30 |
| Example 2 | 2 | - | - | 100 | - | 30 | 70 | 5.1 | 5,112 | 0 | 29 |
| Example 3 | 3 | 2 | - | 90 | 8 | 0 | 100 | 3.4 | 5,902 | 0 | 29 |
| Example 4 | 4 | 2 | - | 90 | 8 | 30 | 70 | 3.9 | 5,883 | 0 | 28 |
| Example 5 | 5 | - | 30 | 70 | - | 0 | 100 | 4.2 | 5,434 | 0 | 28 |
| Example 6 | 6 | - | 30 | 70 | - | 30 | 70 | 3.8 | 5,290 | 0 | 27 |
| Example 7 | 7 | 2 | 48 | 50 | - | 0 | 100 | 3.4 | 6,112 | 0 | 27 |
| Example 8 | 8 | 2 | 48 | 50 | - | 30 | 70 | 3.1 | 6,310 | 0 | 27 |
| Comparative Example 1 | - | - | - | - | - | - | - | - | - | 10 or more | 22 |
| Comparative Example 2 | 9 | - | - | 100 | - | 0 | 100 | 1.8 | 5,362 | 4 | 26 |
| Comparative Example 3 | 10 | 2 | - | 90 | 8 | 0 | 100 | 1.1 | 6,208 | 5 | 25 |
| Comparative Example 4 | 11 | - | 30 | 70 | - | 0 | 100 | 1.2 | 5,542 | 5 | 25 |
| Comparative Example 5 | 12 | 2 | 48 | 50 | - | 0 | 100 | 1.1 | 5,113 | 6 | 24 |

Examples 9 to 16, Comparative Examples 6 to 10

Each of the resin compositions containing polyethylene terephthalate and a silicone-based compound obtained in Examples 1 to 8 and Comparative Examples 1 to 5 was cut into tips of 3 mm square. The resulting tips of 3 mm square were dried in a vacuum dryer at 150°C under 2 Torr for 12 hours and then spun under the conditions of a spinning temperature of 290°C, a spinning rate of 1,500 m/min, a spinneret diameter of 0.23 mm-24H (hole) and an ejection rare of 40 g/min to obtain an undrawn yarn in which a composition ratio of polyethylene terephthalate to a silicone-based compound is from 95% by weight : 5% by weight. Then, the undrawn yarn was drawn using a drawing machine. Under the conditions of a processing rate of 400 m/min, a drawing temperature of 90°C and a setting temperature of 130°C, the undrawn yarn was drawn at a draw ratio to obtain a drawn yarn having a fineness of 85 dtex-24 filament.

Thereafter, a fiber structure object of a knit fabric was produced from the resulting drawn yarn using a circular knitting machine and a specimen was produced according to a method for evaluation of dripping properties of a fiber structure object and a method for evaluation of an oxygen index, and then the evaluation (1) of dripping properties of the fiber structure object and the measurement of an oxygen index (LOI value) were performed.

Since the composition of Comparative Example 6 contains polyethylene terephthalate alone, a fiber structure object of a knit fabric was produced by directly spinning, followed by drawing and circular knitting without kneading, and then evaluated.

As a result, as shown in Table 3, the compositions of Examples 9 to 16 caused no dripping and exerted higher dripping-suppressing effect as compared with the compositions of Comparative Examples 6 to 10. Also, the compositions of Examples 9 to 16 showed higher LOI value as an indicator of flame retardancy as compared with the compositions of Comparative Examples 6 to 10, and were excellent in dripping-suppressing effect and flame retardancy.

[Table 3]

| | Silicone-based compound used | $R_3.SO_{0.5}$ (%) | $R_2SO_{1.0}$ (%) | $RSO_{1.5}$ $RS\ O_{1.5}$ (%) | $SO_{2.0}$ $SO_{2.0}$ (%) | Methyl group | Phenyl group | Silanol group | Molecular weight (Mw) | Number of dripping s | Flame retardancy (LOI) |
|---|---|---|---|---|---|---|---|---|---|---|---|
| Example 9 | 1 | - | - | 100 | - | 0 | 100 | 4.9 | 5,308 | 0 | 29 |
| Example 10 | 2 | - | - | 100 | - | 30 | 70 | 5.1 | 5,112 | 0 | 28 |
| Example 11 | 3 | 2 | - | 90 | 8 | 0 | 100 | 3.4 | 5,902 | 0 | 28 |
| Example 12 | 4 | 2 | - | 90 | 8 | 30 | 70 | 3.9 | 5,883 | 0 | 27 |
| Example 13 | 5 | - | 30 | 70 | - | 0 | 100 | 4.2 | 5,434 | 0 | 27 |
| Example 14 | 6 | - | 30 | 70 | - | 30 | 70 | 3.8 | 5,290 | 0 | 26 |
| Example 15 | 7 | 2 | 48 | 50 | - | 0 | 100 | 3.4 | 6,112 | 0 | 26 |
| Example 16 | 8 | 2 | 48 | 50 | - | 30 | 70 | 3.1 | 6,310 | 0 | 26 |
| Comparative Example 6 | - | - | - | - | - | - | - | - | - | 10 or more | 21 |
| Comparative Example 7 | 9 | - | - | 100 | - | 0 | 100 | 1.8 | 5,362 | 4 | 25 |
| Comparative Example 8 | 10 | 2 | - | 90 | 8 | 0 | 100 | 1.1 | 6,208 | 5 | 24 |
| Comparative Example 9 | 11 | - | 30 | 70 | - | 0 | 100 | 1.2 | 5,542 | 5 | 24 |
| Comparative Example 10 | 12 2 | | 48 | 50 | - | 0 | 100 | 1.1 | 5,113 | 6 | 23 |

Examples 17 to 24, Comparative Examples 11 to 13

Polyethylene terephthalate having an inherent viscosity (IV) of 0.65 was used as a base material resin and polyetherimide (trade name ULTEM® 1010) having a glass transition temperature (Tg) of 210°C manufactured by GE Plastics was used as a compound having an imide structure. Using silicone-based compounds 1 to 8, 13 and 14 shown in Table 1, resin compositions containing polyethylene terephthalate, polyetherimide and a silicone-based compound as shown in Table 4 were obtained in a mixing ratio of 75% by weight (polyethylene terephthalate):20% by weight (polyetherimide):5% by weight (silicone-based compound). Under the conditions of a kneading temperature of 290°C, L/D of 30 and a screw speed of 300 rpm, each of the resin compositions was kneaded using a twin screw extruder.

Then, each of the resulting resin composition was molded under the conditions in the method for evaluation of dripping properties of the resin composition and the method for evaluation of an oxygen index, and then the evaluation of dripping properties of the resin composition and the measurement of an oxygen index (LOI value) were performed.

The composition of Comparative Example 11 contains no silicone-based compound, and polyethylene terephthalate and polyetherimide were mixed in a mixing ratio of 75% by weight (polyethylene terephthalate):25% by weight (polyetherimide).

As a result, as shown in Table 4, the compositions of Examples 17 to 24 caused no dripping and exerted higher dripping-suppressing effect as compared with the compositions of Comparative Examples 11 to 13. Also, the compositions of Examples 17 to 24 showed a higher LOI value as an indicator of flame retardancy as compared with the compositions of Comparative Examples 11 to 13, and were excellent in dripping-suppressing effect and flame retardancy.

[Table 4]

| | Silicone-based compound used | $R_3SO_{0.5}$ (%) | $R_2SO_{1.0}$ (%) | $RSO_{1.5}$ (%) | $SO_{2.0}$ (%) | Methyl group (%) | Phenyl group (%) | Silanol group (%) | Molecular weight (Mw) | Number of drippings | Flame retardancy (LOI) |
|---|---|---|---|---|---|---|---|---|---|---|---|
| Example 17 | 1 | - | - | 100 | - | 0 | 100 | 4.9 | 5,308 | 0 | 33 |
| Example 18 | 2 | - | - | 100 | - | 30 | 70 | 5.1 | 5,112 | 0 | 32 |
| Example 19 | 3 | 2 | - | 90 | 8 | 0 | 100 | 3.4 | 5,902 | 0 | 32 |
| Example 20 | 4 | 2 | - | 90 | 8 | 30 | 70 | 3.9 | 5,883 | 0 | 30 |
| Example 21 | 5 | - | 30 | 70 | - | 0 | 100 | 4.2 | 5,434 | 0 | 32 |
| Example 22 | 6 | - | 30 | 70 | - | 30 | 70 | 3.8 | 5,290 | 0 | 32 |
| Example 23 | 7 | 2 | 48 | 50 | - | 0 | 100 | 3.4 | 6,112 | 0 | 32 |
| Example 24 | 8 | 2 | 48 | 50 | - | 30 | 70 | 3.1 | 6,310 | 0 | 31 |
| Comparative Example 11 | - | - | - | - | - | - | - | - | - | 10 or more | 21 |
| Comparative Example 12 | 13 | - | 100 | - | - | 15 | 85 | 3.5 | 4,983 | 4 | 24 |
| Comparative Example 13 | 14 | - | 100 | - | - | 100 | 0 | 3.2 | 4,891 | 5 | 24 |

Examples 25 to 32, Comparative Examples 14 to 16

Each of the resin compositions containing polyethylene terephthalate, polyetherimide and a silicone-based compound obtained in Examples 17 to 24 and Comparative Examples 11 to 13 was cut into tips of 3 mm square. The resulting tips of 3 mm square were dried in a vacuum dryer at 150°C under 2 Torr for 12 hours and then spun under the conditions of a spinning temperature of 295°C, a spinning rate of 1, 500 m/min, a spinneret diameter of 0.23 mm-24H (hole) and an ejection rare of 40 g/min to obtain an undrawn yarn having a composition ratio of 75% by weight (polyethylene terephthalate):20% by weight (polyetherimide):5% by weight (silicone-based compound). Then, the undrawn yarn was drawn using a drawing machine. Under the conditions of a processing rate of 400 m/min, a drawing temperature of 90°C and a setting temperature of 130°C, the undrawn yarn was drawn at a draw ratio to obtain a drawn yarn having a fineness of 85 dtex-24 filament.

A fiber structure object of a knit fabric was produced from the resulting drawn yarn using a circular knitting machine and a specimen was produced according to a method (2) for evaluation of dripping properties of a fiber structure object and a method for evaluation of an oxygen index, and then the evaluation of dripping properties and the measurement of an oxygen index (LOI value) were performed.

As a result, as shown in Table 5, the compositions of Examples 25 to 32 caused no dripping and exerted higher dripping-suppressing effect as compared with the compositions of Comparative Examples 14 to 16. Also, the compositions of Examples 25 to 32 showed higher LOI value as an indicator of flame retardancy as compared with the compositions of Comparative Examples 14 to 16, and were excellent in dripping-suppressing effect and flame retardancy.

[Table 5]

| | Silicone-based compound used | $R_3SO_{0.5}$ (%) | $R_2SO_{1.0}$ (%) | $RSO_{1.5}$ (%) | $SO_{2.0}$ (%) | Methyl group (%) | Phenyl group (%) | Silanol group (%) | Molecular weight (Mw) | Number of dripping s | Flame retardancy (LOI) |
|---|---|---|---|---|---|---|---|---|---|---|---|
| Example 25 | 1 | - | - | 100 | - | 0 | 100 | 4.9 | 5,308 | 0 | 32 |
| Example 26 | 2 | - | - | 100 | - | 30 | 70 | 5.1 | 5,112 | 0 | 31 |
| Example 27 | 3 | 2 | - | 90 | 8 | 0 | 100 | 3.4 | 5,902 | 0 | 31 |
| Example 28 | 4 | 2 | - | 90 | 8 | 30 | 70 | 3.9 | 5,883 | 0 | 29 |
| Example 29 | 5 | - | 30 | 70 | - | 0 | 100 | 4.2 | 5,434 | 0 | 31 |
| Example 30 | 6 | - | 30 | 70 | - | 30 | 70 | 3.8 | 5,290 | 0 | 31 |
| Example 31 | 7 | 2 | 48 | 50 | - | 0 | 100 | 3.4 | 6,112 | 0 | 31 |
| Example 32 | 8 | 2 | 48 | 50 | - | 30 | 70 | 3.1 | 6,310 | 0 | 30 |
| Comparative Example 14 | - | - | - | - | - | - | - | - | - | 10 or more | 21 |
| Comparative Example 15 | 13 | - | 100 | - | - | 15 | 85 | 3.5 | 4983 | 5 | 24 |
| Comparative Example 16 | 14 | - | 100 | - | - | 100 | 0 | 3.2 | 4,891 | 6 | 24 |

Examples 33 to 40, Comparative Examples 17 to 21

Plain weave fiber structure objects having a basis weight of 400 g/$m^2$ were produced from the drawn yarns obtained in Examples 9 to 16 in which a composition ratio of polyethylene terephthalate to a silicone-based compound is 95% by weight:5% by weight. An aqueous 20% solution of a cyclic phosphonic acid ester (trade name K-19A) having a P element content op 20% manufactured by Meisei Chemical Works, Ltd. as a compound containing a flame retardant element was prepared, and then each of plain weave fiber structure objects was impregnated with the solution using a pad-dry-cure method to obtain a fiber structure object containing a flame retardant element as shown in Table 6.

Using a mangle, a pad was impregnated with a processing solution. After impregnation, a pickup rate was about 80% and drying was performed at 130°C/2 min using a pin tenter. Curing was performed at 190°C/2 min using a pin tenter.

A specimen of the resulting fiber structure object was produced according to a method (2) for evaluation of dripping properties of a fiber structure object and a method for evaluation of an oxygen index, and then the evaluation of dripping properties and the measurement of an oxygen index (LOI value) were performed.

In the same manner as in Examples 9 to 16, except that those shown in Table 6 were used as a silicone-based compound, drawn yarns were obtained in Comparative Examples 17 to 21. Plain weave fiber structure objects were produced from the resulting drawn yarns in the same manner as in Examples 33 to 40, and then the evaluation of dripping properties and the evaluation of the oxygen index were performed in the same manner as in Examples 33 to 40. In Comparative Examples 17, 19 and 20, impregnation with the flame retardant element using a pad-dry-cure method was not performed.

As a result, as shown in Table 6, the compositions of Examples 33 to 40 caused no dripping and exerted higher dripping-suppressing effect as compared with the compositions of Comparative Examples 17 to 21. Also, the compositions of Examples 33 to 40 showed higher LOI value as an indicator of flame retardancy as compared with the compositions of Comparative Examples 17 to 21, and were excellent in dripping-suppressing effect and flame retardancy.

[Table 6]

| | Silicone-based compound used | $R_3SO_{0.5}$ (%) | $R_2S\ O_{1.0}$ (%) | $RSO_{1.5}$ (%) | $SO_{2.0}$ (%) | Methyl group (%) | Phenyl element group (%) | Silanol group (%) | Molecular weight (Mw) | P element content of (pm) | Number of drippings | LOI |
|---|---|---|---|---|---|---|---|---|---|---|---|---|
| Example 33 | 1 | - | - | 100 | - | 0 | 100 | 4.9 | 5,308 | 28,000 | 0 | 32 |
| Example 34 | 2 | - | - | 100 | - | 30 | 70 | 5.1 | 5,112 | 25,000 | 0 | 31 |
| Example 35 | 3 | 2 | 30 | 48 | 20 | 0 | 100 | 3.4 | 5,902 | 26,000 | 0 | 30 |
| Example 36 | 4 | 2 | 30 | 48 | 20 | 30 | 70 | 3.9 | 5,883 | 25,000 | 0 | 29 |
| Example 37 | 5 | 2 | 50 | 28 | 20 | 0 | 100 | 4.2 | 5,434 | 22,000 | 0 | 29 |
| Example 38 | 6 | 2 | 50 | 28 | 20 | 30 | 70 | 3.8 | 5,290 | 24,000 | 0 | 28 |
| Example 39 | 7 | 7 | 2 | 48 | 50 | - | 0 | 100 | 3.4 | 6,112 | 0 | 28 |
| Example 40 | | 8 | 2 | 48 | 50 | - | 30 | 70 | 3.1 | 6,310 | 0 | 28 |
| Comparative Example 17 | 1 | - | - | 100 | - | 0 | 100 | 4.9 | 5,308 | 30 | 4 | 29 |
| Comparative Example 18 | - | - | - | - | - | - | - | - | - | 30,000 | 10 or more | 27 |
| Comparative Example 19 | 13 | - | 100 | - | - | 15 | 85 | 3.5 | 4,983 | 30 | 6 | 23 |
| Comparative Example 20 | 14 | - | 100 | - | - | 100 | 0 | 3.2 | 4,891 | 27 | 7 | 22 |
| Comparative Example 21 | 14 | - | 100 | - | - | 100 | | 3.2 | 4,891 | 30,000 | 10 or more | 28 |

INDUSTRIAL APPLICABILITY

According to the present invention, it is possible to provide, as a flame retardant resin material and a flame retardant fiber material, a flame retardant material which can be used for applications such as industries, clothings and non-clothings and does not cause melt-dripping of a material due to dripping, and also can exhibit flame retardancy.

The fiber structure object of the present invention can be preferably used as textile products which require the dripping-suppressing effect and flame retardancy, for example, textile products, which are capable of suppressing dripping and also exhibit flame retardancy, for vehicle interior materials such as car sheet and car mat, interior materials such as curtain, carpet and chair covering material, and clothing materials.

## Claims

1. A polyester-based resin composition comprising a polyester-based resin and a silicone-based compound, the silicone-based compound being a silicone-based compound containing at least a structural unit represented by $RSiO_{1.5}$ (R is an organic group), wherein the content of a silanol group of the silicone-based compound is 2% or more and 10% or less in terms of a weight ratio based on the entire silicone-based compound, and a mixing ratio of the silicone-based compound to the polyester-based resin is 100:0.1 or more and 100:10 or less in terms of a weight ratio.

2. The polyester-based resin composition according to claim 1, wherein the silicone-based compound has a phenyl group as an organic group and the content of the phenyl group is 85% or more in terms of a molar ratio based on the entire organic groups contained in the silicone-based compound.

3. The polyester-based resin composition according to claim 1, wherein a weight average molecular weight of the silicone-based compound is 500 or more and 100,000 or less.

4. The polyester-based resin composition according to claim 1, wherein the silicone-based compound contains a $RSiO_{1.5}$ structural unit in the content of 90% or more in a molar ratio based on the entire silicone-based compound.

5. The polyester-based resin composition according to claim 1, wherein the polyester-based resin is selected from polyethylene terephthalate, polypropylene terephthalate, polybutylene terephthalate, polyethylene naphthalate and polylactic acid.

6. A resin molded article comprising the polyester-based resin composition according to claim 1.

7. A fiber structure object comprising the polyester-based resin composition according to claim 1.

8. The fiber structure object according to claim 7, which is in the form selected from a filament, a staple and a cloth.

9. A textile product comprising the fiber structure object according to claim 7.

10. A resin composition comprising a base material resin, a silicone-based compound containing at least a structural unit represented by $RSiO_{1.5}$ (R is an organic group), and a compound having an imide structure.

11. The resin composition according to claim 10, wherein the organic group contained in the silicone-based compound has a phenyl group and the content of the phenyl group is 20% or more in a molar ratio based on the entire organic groups contained in the silicone-based compound.

12. The resin composition according to claim 10, wherein the content of a silanol group in the silicone-based compound is 2% or more and 10% or less in terms of a weight ratio based on the entire silicone-based compound.

13. The resin composition according to claim 10, wherein Tg of the compound having an imide structure is 130°C or higher and 300°C or lower.

14. The resin composition according to claim 10, wherein the imide structure-containing compound is polyetherimide.

15. A resin molded article comprising the resin composition according to claim 10.

**16.** A fiber structure object comprising the resin composition according to claim 10.

**17.** A textile product comprising the fiber structure object according to claim 16.

**18.** A polyester-based fiber structure object comprising a polyester-based resin, a silicone-based compound and a flame retardant element, wherein the silicone-based compound contains at least a structural unit represented by $RSiO_{1.5}$ (R is an organic group), the content of the silicone-based compound is 0.5% or more and 30% or less in terms of a weight ratio based in the resin composition, and the content of the flame retardant element is 1,000 ppm or more and 50, 000 ppm or less in the resin composition.

**19.** The polyester-based fiber structure object according to claim 18, wherein the organic group contained in the silicone-based compound has a phenyl group and the content of the phenyl group is 20% or more in terms of a molar ratio based on the entire organic groups contained in the silicone-based compound.

**20.** The polyester-based fiber structure object according to claim 18, wherein the content of a silanol group in the silicone-based compound is 2% or more and 10% or less in terms of a weight ratio based on the entire silicone-based compound.

**21.** A textile product comprising the polyester-based fiber structure object according to claim 18.

**INTERNATIONAL SEARCH REPORT**

International application No.
PCT/JP2006/301194

A. CLASSIFICATION OF SUBJECT MATTER
*C08L67/00*(2006.01), *C08L83/04*(2006.01), *D01F6/92*(2006.01)

According to International Patent Classification (IPC) or to both national classification and IPC

B. FIELDS SEARCHED

Minimum documentation searched (classification system followed by classification symbols)
C08L67/00-04, C08L83/04-08, D01F6/92

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-213117 A (Dow Corning Toray Silicone Co., Ltd.), 30 July, 2003 (30.07.03), Claim 1; Par. No. [0007] & WO 03/18692 A1 | 1-6<br>7-21 |
| X<br>A | JP 2002-173581 A (KANEKA Corp.), 21 June, 2002 (21.06.02), Claims 1, 4; Par. Nos. [0085], [0091] (Family: none) | 1-6,10-12,15<br>7-9,13,14, 16-21 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 February, 2006 (10.02.06) | Date of mailing of the international search report<br>21 February, 2006 (21.02.06) |
| Name and mailing address of the ISA/<br>Japanese Patent Office<br>Facsimile No. | Authorized officer<br><br>Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 54036365 A
- JP 7166040 A
- JP 8209446 A